(19) Europäisches Patentamt
European Patent Office
Office européen des brevets

(11) EP 1 036 823 B1

(12) **EUROPÄISCHE PATENTSCHRIFT**

(45) Veröffentlichungstag und Bekanntmachung des Hinweises auf die Patenterteilung:
**06.08.2003 Patentblatt 2003/32**

(51) Int Cl.[7]: **C09B 43/16**, C09D 11/02
// D06P5/00, D21H21/28,
G03G9/09, C09D5/03

(21) Anmeldenummer: **00104746.3**

(22) Anmeldetag: **04.03.2000**

(54) **Rote Säurefarbstoffe für den Tintenstrahldruck und Papiereinfärbung**

Red acid dyes for ink-jet printing and for colouring paper

Colorants acides rouges pour l'impression par jet d'encre et la coloration du papier

(84) Benannte Vertragsstaaten:
**CH DE GB LI**

(30) Priorität: **16.03.1999 DE 19911536**

(43) Veröffentlichungstag der Anmeldung:
**20.09.2000 Patentblatt 2000/38**

(73) Patentinhaber: **Clariant GmbH**
**65929 Frankfurt am Main (DE)**

(72) Erfinder:
- **Bauer, Wolfgang, Dr.**
  **63477 Maintal (DE)**
- **Geisenberger, Josef, Dr.**
  **65843 Sulzbach (DE)**
- **Menzel, Heidemarie**
  **65812 Bad Soden (DE)**
- **Pedrazzi, Reinhard, Dr.**
  **4123 Allschwill (CH)**

(56) Entgegenhaltungen:
**EP-A- 0 693 538** **EP-A- 0 866 105**
**DE-A- 19 607 851** **GB-A- 2 166 147**

Bemerkungen:
Die Akte enthält technische Angaben, die nach dem Eingang der Anmeldung eingereicht wurden und die nicht in dieser Patentschrift enthalten sind.

**EP 1 036 823 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Gegenstand der vorliegenden Erfindung sind wasserlösliche Säure-Farbstoffe, Verfahren zu ihrer Herstellung, ihre Verwendung zum Färben und Bedrucken von natürlichen und synthetischen Fasermaterialien sowie Aufzeichnungsflüssigkeiten, insbesondere für das Tintenstrahl- oder Ink-Jet-Verfahren, und Flüssigeinstellungen für die Papiermassefärbung, welche die erfindungsgemäßen Farbstoffe enthalten.

Beim Tintenstrahl- oder Ink-Jet-Verfahren handelt es sich um ein berührungsloses Druckverfahren, bei dem Tröpfchen der Aufzeichnungsflüssigkeit aus einer oder mehreren Düsen auf das zu bedruckende Substrat gelenkt werden.
Um Drucke hoher Schärfe und guter Auflösung zu erhalten, müssen die Aufzeichnungsflüssigkeiten sowie die darin enthaltenen Farbstoffe hohen Anforderungen genügen, insbesondere im Hinblick auf Reinheit, Partikelfreiheit, Löslichkeit, Lagerstabilität, Viskosität, Oberflächenspannung und Leitfähigkeit. Insbesondere werden sehr hohe Anforderungen an die Farbstärke, Farbton, Brillanz und Echtheitseigenschaften, wie beispielsweise Lichtechtheit, Wasserechtheit und Reibechtheit gestellt. Eine hohe Lichtechtheit ist insbesondere von großer Bedeutung für Ink-Jet-Anwendungen in Außenbereichen und bei der Herstellung von Ink-Jet-Drucken mit photographischer Qualität. Um diese Eigenschaften zu erfüllen, werden teilweise Mischungen verschiedener Farbstoffe mit unterschiedlichen Eigenschaften verwendet. Dies ist z.B beschrieben in EP 0 825 233 A2 und US 5 188 664.

Die Entwicklung von wasserlöslichen Magenta-Farbstoffen, welche die gewünschten Kombination von Farbton, hoher Brillanz und Farbstärke, hoher Lichtechtheit und guter Wasserechtheit aufweisen, hat sich bisher als sehr schwierig erwiesen (s. beispielsweise P. Gregory, High-Technology Applications of Organic Colorants, Plenum Press, New York (1991), S. 197 - 201.

Wasserlösliche Reaktivfarbstoffe, welche zum Färben oder Bedrucken von Baumwollfasern eingesetzt werden können, sind bekannt. Außerdem können diese Farbstoffe auch zum Herstellen von Ink-Jet-Tinten für den Ink-Jet-Druck verwendet werden (Surface Coatings International 77, 36 - 41 (1994). Die bekannten Reaktivfarbstoffe weisen jedoch Nachteile bei der Herstellung von Aufzeichnungsflüssigkeiten für das Ink-Jet-Verfahren auf, insbesondere im Hinblick auf die Lagerstabilität von Tinten und Aufzeichnungsflüssigkeiten und Lichtechtheit der erhaltenen Drucke.

In der EP-A-0 693 538, der EP-A-0 866 105 und der GB-A-2 166 147 werden ebenfalls wasserlösliche Säurefarbstoffe offenbart, die jedoch für Ink-Jet-Anwendungen unzureichende Wasserechtheiten besitzen. Es besteht somit ein Bedarf an wasserlöslichen Farbstoffen, welche den bereits bekannten Magenta-Farbstoffen insbesondere im Farbton, in der Lagerstabilität der Tinten und Wasserechtheit überlegen sind und gleichzeitig die weiteren für den Ink-Jet-Bereich geforderten Eigenschaften aufweisen.

Überraschenderweise wurde gefunden, daß die gestellten Anforderungen von nachstehend definierten, wasserlöslichen Säurefarbstoffen erfüllt werden.

Die vorliegende Erfindung betrifft Säurefarbstoffe der Formel (I)

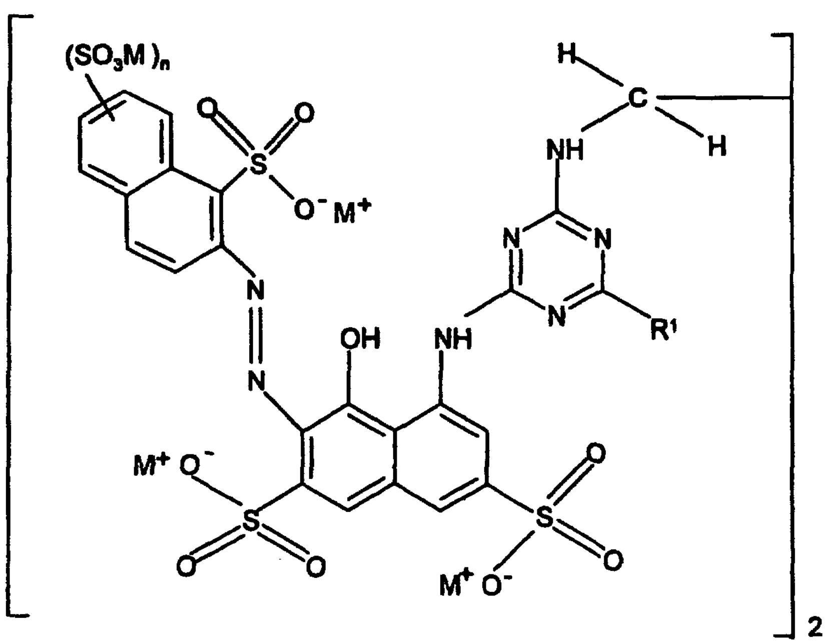

(I)

worin

- $R^1$ für die Reste A-X-COOM, A-X-$SO_3$M, oder $NR^5R^6$,
- A für $NR^7$ oder S,
- X für einen geradkettigen oder verzweigten ($C_1$-$C_{16}$)-Alkylen-Rest, für einen geradkettigen oder verzweigten, durch Hydroxy, Carboxy oder Amino substituierten ($C_1$-$C_{16}$)-Alkylenrest, einen Arylenrest oder einen durch Hydroxy, Carboxy oder Sulfo substituierten Arylen-Rest;
- $R^5$ für ($C_1$-$C_4$)-Alkyl, das durch einen oder mehrere, z.B. 2, 3 oder 4, Hydroxy- oder 2-Hydroxyethoxy-Gruppen substituiert ist; $R^6$ eine Bedeutung von $R^5$ oder Wasserstoff ist;
- $R^7$ für Wasserstoff, Methyl oder Ethyl;
- M für ein einwertiges Kation oder ein Äquivalent eines mehrwertigen Kations und
- n für die Zahl 0 oder 1 stehen.

Bevorzugt sind Verbindungen der Formel (I), worin X für für einen geradkettigen oder verzweigten ($C_1$-$C_6$)-Alkylenrest, einen geradkettigen oder verzweigten, durch Hydroxy, Carboxy oder Amino substituierten ($C_1$-$C_6$)-Alkylenrest, einen Phenylenrest oder einen durch Hydroxy, Carboxy oder Sulfo substituierten Phenylenrest steht. Besonders bevorzugt steht X für einen ($C_1$-$C_4$)-Alkylen- oder Phenylenrest. X bedeutet beispielsweise Methylen, Ethylen, Ethan-1,1-diyl, Propan-1,1-diyl, 1,2-Propylen, 1,3-Propylen, 1,6-Hexylen, 2-Methylpropan-1,1-diyl, 3-Methylbutan-1,1-diyl, 2-Methylbutan-1,1-diyl, 2-Hydroxyethan-1,1-diyl, Propansäure-3,3-diyl, Butansäure-4,4-diyl, 5-Aminopentan-1,1-diyl, 3-Aminopropan-1,1-diyl oder 4-Aminobutan-1,1-diyl.

$R^5$ bedeutet beispielsweise Hydroxymethyl, Hydroxyethyl, 2-Hydroxypropyl oder 3-Hydroxypropyl, wobei Hydroxyethyl und Hydroxypropyl bevorzugt sind.

$R^6$ bedeutet beispielsweise Wasserstoff, Ethyl, Hydroxymethyl, Hydroxyethyl, 2-Hydroxypropyl oder 3-Hydroxypropyl, wobei Wasserstoff, Hydroxyethyl und Hydroxypropyl bevorzugt sind.

$R^7$ bedeutet vorzugsweise Wasserstoff.

M steht bevorzugt für Wasserstoff, ein Lithium-, Natrium-, Kalium- oder Ammonium-Ion der Formel (II)

$$R^8R^9R^{10}R^{11}N^+ \qquad (II)$$

in der $R^8$, $R^9$, $R^{10}$ und $R^{11}$ unabhängig voneinander Wasserstoff, unsubstituiertes ($C_1$-$C_4$)-Alkyl oder durch eine oder mehrere, z.B. 2, 3 oder 4, Hydroxy- oder 2-Hydroxyethoxy-Gruppen substituiertes ($C_1$-$C_4$)-Alkyl bedeuten. M steht darüberhinaus bevorzugt für eine Mischung der genannten Kationen.

In bevorzugten wasserlöslichen Säure-Farbstoffen der Formel (I) steht der Rest $R^1$ für A-X-COOM und A-X-$SO_3$M.

In besonders bevorzugten erfindungsgemäßen Farbstoffen der Formel (I) steht $R^1$ für A-X-$SO_3$M.

Die erfindungsgemäßen Säure-Farbstoffe der Formel (I) können beispielsweise dadurch hergestellt werden, daß man den Reaktiv-Farbstoff der allgemeinen Formel (III)

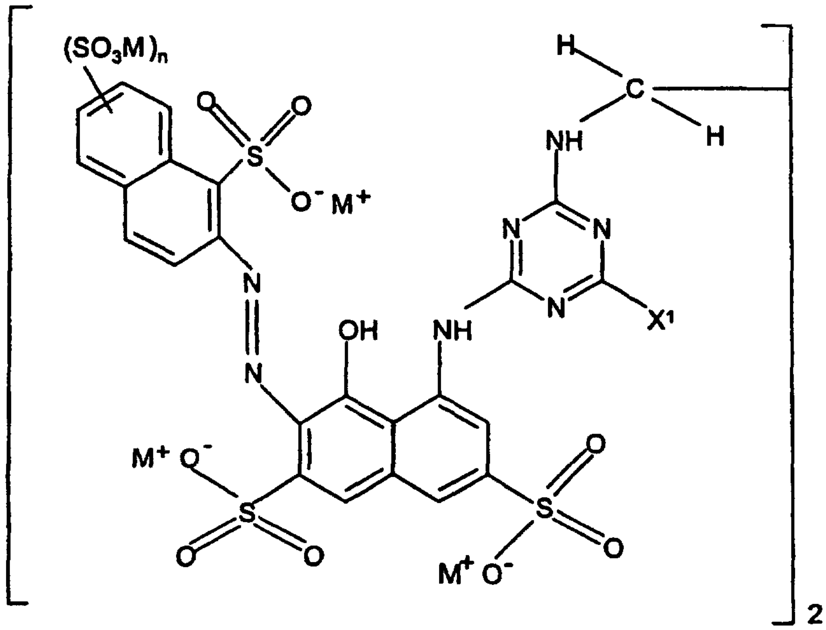

(III)

worin M und n die bereits genannte Bedeutung besitzt und $X^1$ einem Halogenatom, bevorzugt einem Chloratom oder Bromatom entspricht, mit einer oder mehreren, z.B. 1, 2 oder 3, Verbindungen der Formel (IV), (V) und/oder (VII)

$$H\text{-}A\text{-}X\text{-}COOM \quad (IV)$$

$$H\text{-}A\text{-}X\text{-}SO_3M \quad (V)$$

$$H\text{-}NR^5\,R^6 \quad (VII)$$

umsetzt.

Die Umsetzungen werden normalerweise im wäßrigen Medium bei pH-Werten von 3 bis 14, bevorzugt pH 7,5 bis 12, und Temperaturen von 10°C bis 100°C, bevorzugt 40 bis 80°C, durchgeführt. Pro Rest $X_1$ werden die Verbindungen der Formel (IV)-(VII) zweckmäßig in einer 1 bis 2,5 molaren Menge eingesetzt.

Die Verbindungen der Formel (III) können in an sich bekannter Weise,wie z.B. in EP-A-0 755 985, EP-A-0 832 940 oder DE-A-196 07 851 beschrieben, hergestellt werden.

Als Carbonsäuren der allgemeinen Formel (IV) können beispielsweise eingesetzt werden: Glycin, N-Methylglycin, 2-Aminopropionsäure, 3-Aminopropionsäure, 2-Aminobuttersäure, 3-Aminobuttersäure, 6-Aminohexancarbonsäure, Valin, Leucin, Isoleucin, Serin, Asparaginsäure, Glutaminsäure, Lysin, 1,3-Diaminobuttersäure, 1,4-Diaminopentancarbonsäure, 2-Aminobenzolcarbonsäure, 3-Aminobenzolcarbonsäure, 4-Aminobenzolcarbonsäure, 5-Aminobenzol-1,3-dicarbonsäure, Thioglykolsäure, 3-Mercaptopropancarbonsäure.

Als Sulfonsäuren der allgemeinen Formel (V) eignen sich beispielsweise: Aminomethansulfonsäure, Taurin, 2-Aminopropansulfonsäure, 3-Aminopropansulfonsäure, 2-Aminobenzolsulfonsäure, 3-Aminobenzolsulfonsäure, 4-Aminobenzolsulfonsäure, 3-Mercaptopropansulfonsäure und 4-Aminobenzol-1,3-disulfonsäure.

Als Amine der Formel (VII) kommen beispielsweise Ethanolamin, Diethanolamin, 2-Aminopropanol, 3-Aminopropanol, Di-propylamin, N-Methylethanol, in Betracht.

Die erfindungsgemäßen Säure-Farbstoffe der allgemeinen Formel (I) können aus den zunächst erhaltenen, bevorzugt wäßrigen Reaktionsgemischen durch übliche Aufarbeitungsmethoden, beispielsweise durch Aussalzen, Filtrieren oder durch Sprühtrocknung, gegebenenfalls nach teilweiser oder vollständiger Entsalzung mittels Membranfiltration, isoliert werden. Es kann jedoch auch auf eine Isolierung verzichtet werden und die erfindungsgemäße Farbstoffe der allgemeinen Formel (I) enthaltende Reaktionsmischung durch Zusatz von organischen undloder anorganischen Basen und/oder Feuchthaltemitteln und gegebenenfalls nach teilweiser oder vollständiger Entsalzung mittels

Membranfiltration direkt in konzentrierte Farbstoff-Lösungen übergeführt werden.

Als anorganische Basen kommen beispielsweise Lithiumhydroxid, Lithiumcarbonat, Natriumhydroxid, Natriumhydrogencarbonat, Kaliumhydroxid, Kaliumcarbonat und Ammoniak in Betracht. Geeignete organische Basen sind beispielsweise Monoethanolamin, Diethanolamin, Triethanolamin, 2-Aminopropanol, 3-Aminopropanol, Dipropanolamin, Tripropanolamin, N-Methylaminoethanol, N,N-Dimethylaminoethanol, N-Phenylaminopropanol, Ethylendiamin, Tetramethylethylendiamin, Tetramethylpropylendiamin, Tetramethylhexylendiamin, Diethylentriamin, Triethylentetramin und Polyethylenimin.

Feuchthaltemittel sind beispielsweise Formamid, Harnstoff, Tetramethylharnstoff, ε-Caprolactam, Ethylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Natrium-Xylolsulfonat, Natrium-Cumolsulfonat und Natrium-Butylmonoglykolsulfat.

Gegenstand der vorliegenden Erfindung ist auch die Verwendung von wasserlöslichen Säure-Farbstoffen der allgemeinen Formel (I) zum Färben und Bedrucken von natürlichen und synthetischen Fasermaterialien, insbesondere zur Aufzeichnung von Schrift und Bildern auf verschiedenen Aufzeichnungsmedien, sowie zum Färben von Papier oder Zellstoffen in der Masse.

Beispielsweise sind die erfindungsgemäßen Säure-Farbstoffe der allgemeinen Formel (I) geeignet als Farbmittel in elektrophotographischen Tonern und Entwicklern, wie z.B. Einkomponenten- und Zweikomponentenpulvertonern, Magnettonern, Flüssigtonern, Polymerisationstonem sowie weiteren Spezialtonern. Typische Tonerbindemittel sind Polymerisations- Polyadditions- und Polykondensationsharze, wie Styrol- Styrolacrylat-, Styrolbutadien-, Acrylat-, Polyester-, Phenol-Epoxidharze, Polysulfone, Polyurethane, einzelne oder in Kombination, sowie Polyethylen und Polypropylen, die noch weitere Inhaltsstoffe, wie Ladungssteuermittel, Wachse oder Fließmittel, enthalten können oder im Nachhinein zugesetzt bekommen können.

Desweiteren sind die erfindungsgemäßen Säurefarbstoffe geeignet als Farbmittel in Pulver und Pulverlacken, insbesondere in triboelektrisch oder elektrokinetisch versprühten Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethane- und Acrylharze zusammen mit üblichen Härtern eingesetzt. Auch Kombinationen von Harzen finden Verwendung. So werden beispielsweise häufig Epoxidharze in Kombination mit, carboxyl- und hydroxylgruppenhaltigen Polyesterharzen eingesetzt Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazolin und Dicarbonsäuren.

Außerdem sind die erfindungsgemäßen Säurefarbstoffe geeignet, als Farbmittel für Farbfilter, sowohl für die additive wie für die subtraktive Farberzeugung (Lit.: P. Gregory "Topics in Applied Chemistry: High Technology Applications of Organic Colorants" Plenum Press, New York 1991, Seite 15-25).

Die erfindungsgemäßen Farbstoffe eignen sich insbesondere zur Herstellung von Aufzeichnungsflüssigkeiten, insbesondere von Tinten auf wäßriger und nichtwäßriger Basis für das Tintenstrahl - oder Ink - Jet - Druckverfahren, sowie für solche Tinten, die nach dem Hot-melt Verfahren arbeiten bzw. auf Mikroemulsionen basieren, aber auch für sonstige Druck-, Vervielfältigungs-, Markierungs-, Schreib-, Zeichen-, Stempel- oder Registrierverfahren. Dabei werden rote Druckbilder von ausgezeichneter Qualität erhalten, die sich durch eine sehr gute Brillanz und Druckschärfe sowie durch eine gute Lichtechtheit, Abriebfestigkeit und Wasserechtheit auszeichnen.

Gegenstand der vorliegenden Erfindung sind auch Aufzeichnungsflüssigkeiten, die dadurch gekennzeichnet sind, daß sie eine oder mehrere der wasserlöslichen Säurefarbstoffe der Formel (I), ggf. zusammen mit anderen wasserlöslichen Farbstoffen zum Nuancieren, enthalten. Die genaue Zusammensetzung der Aufzeichnungsflüssigkeit muß dem beabsichtigten Verwendungszweck angepaßt werden.

Die fertigen Aufzeichnungsflüssigkeiten enthalten im allgemeinen insgesamt 0,5 bis 15 Gew.-% (trocken gerechnet) eines oder mehrerer, z.B. 2, 3 oder 4, Farbstoffe der allgemeinen Formel (I), 0 bis 99 Gew.-% Wasser und 0,5 bis 99,5 Gew.-% Lösungsmittel undl oder Feuchthaltemittel. In einer bevorzugten Ausführungsform enthalten die fertigen Aufzeichnungsflüssigkeiten 0,5 bis 15 Gew.% Farbstoff, 35 bis 75 Gew.-% Wasser und 10 bis 50 Gew.-% Lösungsmittel und/ oder Feuchthaltemittel, in einer anderen bevorzugten Ausführungsform 0,5 bis 15 Gew.-% Farbstoffe, 0 bis 20 Gew.-% Wasser und 70 bis 99,5 Gew.-% Lösungsmittel und/ oder Feuchthaltemittel. Die fertigen Aufzeichnungsflüssigkeiten können noch weitere, nachstehend erwähnte Zusätze enthalten.

Zur Herstellung der Aufzeichnungsflüssigkeiten benutztes Wasser wird vorzugsweise in Form von destilliertem oder entsalztem Wasser eingesetzt. Bei den in den Aufzeichnungsflüssigkeiten enthaltenen Lösungsmitteln und/ oder Feuchthaltemitteln kann es sich um ein organisches Lösungsmittel oder um ein Gemisch derartiger Lösungsmittel handeln, wobei mit Wasser mischbare Lösungsmittel bevorzugt sind. Geeignete Lösungsmittel sind beispielsweise einoder mehrwertige Alkohole, deren Ether und Ester, z. B. Alkanole, insbesondere mit 1 bis 4 C-Atomen, wie z.B. Methanol, Ethanol, Propanol, Isopropanol, Butanol, Isobutanol; zwei - oder dreiwertige Alkohole, insbesondere mit 2 bis 6 C-Atomen, z.B. Ethylenglykol, Propylenglykol, 1,3-Propandiol, 1,4-Butandiol, 1,5-Pentandiol, 1,6-Hexandiol,

1,2,6-Hexantriol, Glycerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykol-mono-methyl, -ethyl- oder -butyl-ether, Triethylenglykol-mono-methyl- oder -ethyl-ether; Ketone und Ketonalkohole wie z. B. Aceton, Methylethylketon, Diethylketon, Methylisobutylketon, Methylpentylketon, Cyclopentanon, Cyclohexanon, Diacetonalkohol; Amide, wie z. B. Dimethylformamid, Dimethylacetamid, N-Methylpyrrolidon; ferner Harnstoff, Tetramethylharnstoff, Thiodiglykol.

Weiter können die erfindungsgemäßen Aufzeichnungsflüssigkeiten noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z. B. Ethanolamin, Diethanolamin, Triethanolamin, N,N-Dimethylethanolamin, Diisopropylamin dienen hauptsächlich zur Erhöhung des pH-Wertes der Aufzeichnungsflüssigkeit. Sie sind normalerweise zu 0 bis 10 Gew.-%, vorzugsweise 0,5 bis 5 Gew.-% in der Aufzeichnungsflüssigkeit vorhanden.

Den Aufzeichnungsflüssigkeiten für das Ink-Jet-Druckverfahren können je nach Ausführungsform dieses Druckverfahrens, z.B. als Continuous-Jet-, Intermittent-Jet-, Impuls-Jet- oder Compound-Jet-Verfahren, noch weitere Additive, z. B. zur Pufferung des pH-Wertes, zur Einstellung der elektrischen Leitfähigkeit, der spezifischen Wärme, des thermischen Expansionskoeffizienten und der Leitfähigkeit, zugesetzt werden.

Bei der Lagerung erfindungsgemäßer Aufzeichnungsflüssigkeiten tritt keine Abscheidung von Niederschlägen auf, welche zu unscharfen Druckbildern oder zur Verstopfung von Düsen führt.
Die erfindungsgemäßen Aufzeichnungsflüssigkeiten liegen hinsichtlich Viskosität und Oberflächenspannung in den für Ink-Jet-Verfahren geeigneten Bereichen. Sie liefern Druckbilder hoher optischer Dichte mit ausgezeichneter Lichtechtheit, Wasserechtheit, Abriebfestigkeit und Auflösung.

Bei den Gehaltsangaben der folgenden Beispiele handelt es sich um Gewichtsprozente.

Beispiel 1

30 g des Farbstoffs der folgenden Formel

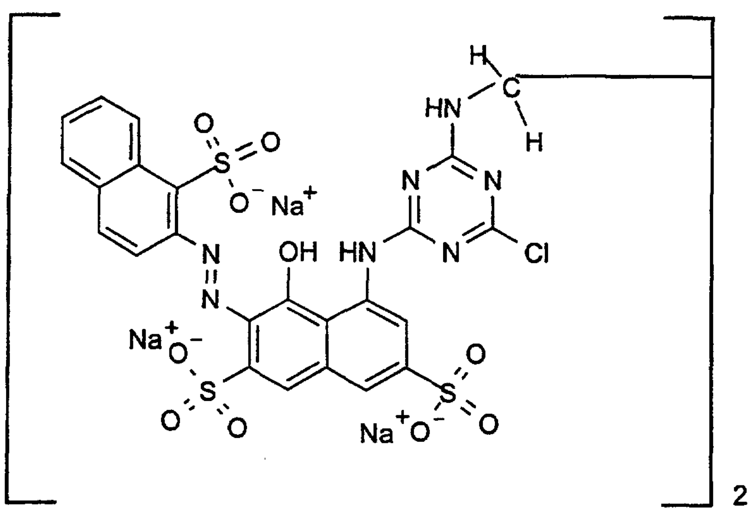

werden in 300 ml Wasser eingetragen und bei 20 ° C mit einer Lösung von 3,8 g Taurin in 10 ml Wasser versetzt. Anschließend wird das Reaktionsgemisch auf 60°C erwärmt und durch Zugabe von 4,5 ml einer 10 molaren NaOH-Lösung der pH-Wert bei 9,0 gehalten.

Zur Vervollständigung der Reaktion rührt man 2 Stunden bei 95°C nach und kühlt die erhaltene Lösung mit dem roten Farbstoff der Formel

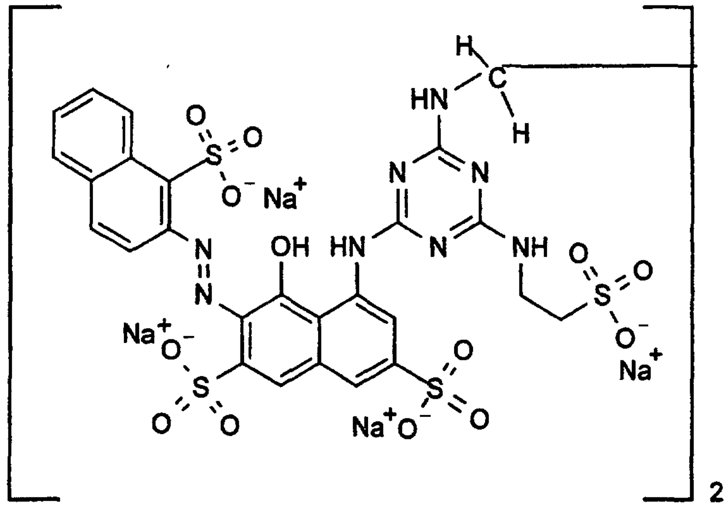

auf Raumtemperatur ab. Diese Farbstofflösung wird anschließend durch Membranfiltration entsalzt und getrocknet.
Ausbeute: 17,7 g rotes Pulver
Absorptionsspektrum in Wasser: λmax = 522 nm.
Der nach Beispiel 1 erhaltene Säure-Farbstoff eignet sich hervorragend zur Herstellung von Aufzeichnungsflüssigkeiten für das Ink-Jet-Verfahren, wobei brillante blaustichig-rote Druckbilder mit sehr guter Wasserechtheit und Lichtechtheit erhalten werden.

Beispiel 2

Verfährt man nach den Angaben des Beispiels 1, setzt jedoch statt einer Lösung von 3,8 g Taurin in 10 ml Wasser 1,83 g Ethanolamin ein, so erhält man nach Entsalzung der zunächst erhaltenen Farbstofflösung und Sprühtrocknung 15,9 g eines roten Farbstoffs der Formel

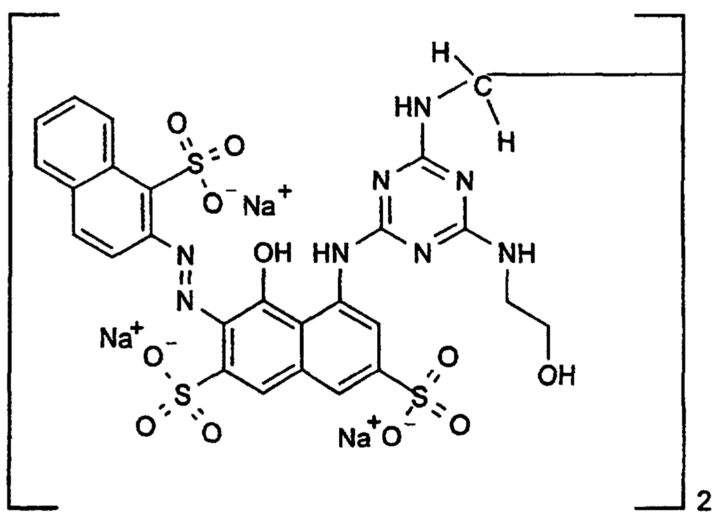

der sich hervorragend zur Herstellung von Aufzeichnungsflüssigkeiten für das Ink-Jet-Verfahren eignet.
Absorptionsmaximum in Wasser: λmax: 523 nm.

Beispiel 3

1000 g der nach Beispiel 1 erhaltenen Farbstofflösung werden nach der Entsalzung mit 2,0 g eines handelsüblichen Konservierungsmittels, z.B. ®Mergal K 10 N, versetzt. Man erhält 477 g einer 10 % igen, lagerstabilen Lösung des Farbstoffs, die sich hervorragend zur Herstellung von Tinten für das Ink-Jet-Verfahren eignet.

Beispiel 4

Herstellung von Tinten von 2,5 % Reinfarbstoffgehalt: 2,5 g Reinfarbstoff gemäß Beispiel 1 werden unter Rühren bei 25°C in ein Gemisch von 20,0 g Diethylenglykol, 2,5 g N-Methylpyrrolidon, 1,0 g Triethanolamin und 76,4 g Wasser eingetragen und gelöst.

In der folgenden Tabelle sind weitere erfindungsgemäße Farbstoffe der Formel

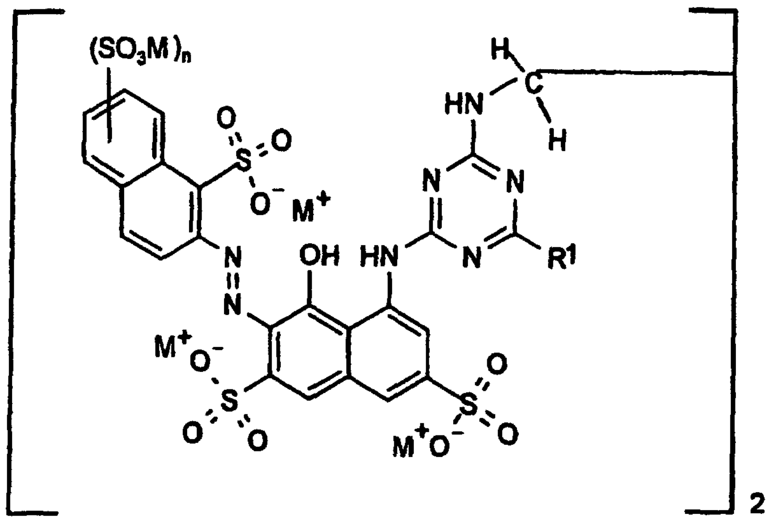

genannt, wobei in der Tabelle das Absorptionsspektrum in Wasser aufgeführt ist

| Beisp. | $R^1$ | M | $\lambda_{max}$ (nm) | n |
|---|---|---|---|---|
| 5 | $SCH_2COOM$ | Na | 520 | 0 |
| 6 | $NHCH_2COOM$ | Na | 522 | 0 |
| 7 | $SCH_2CH_2CH_2SO_3M$ | Na | 520 | 0 |
| 8 | $NHCH_2CH_2SO3M$ | Na | 522 | 0 |
| 9 | $NHCH_2CH_2OH$ | Na | 523 | 0 |
| 10x) | $NHCH_2CH_2CH_2N(CH_3)_2$ | Na | 523 | 0 |
| 11x) | OH | Na | 518 | 0 |
| 12 | $NHCH_2CH_2COOM$ | Na | 521 | 1 |
| 13 | $NHCH_2COOM$ | Li | 520 | 0 |
| 14 | $NHCH_2COOM$ | $NH(CH_2CH_2OH)_2$ | 520 | 0 |

x) Beispiele 10 und 11 sind Vergleichsbeispiele

## Patentansprüche

**1.** Säurefarbstoff der Formel (I)

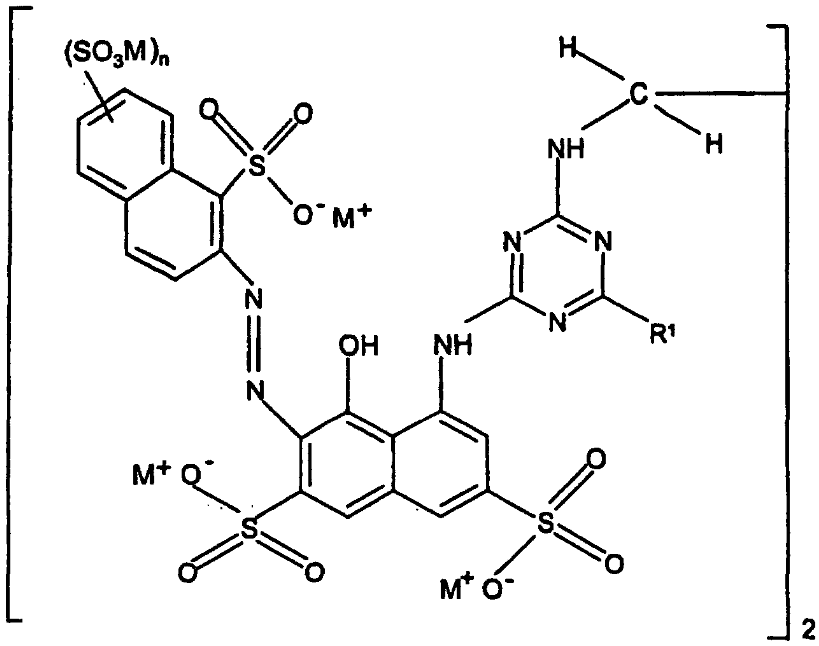

(I)

worin

$R^1$ für die Reste A-X-COOM, A-X-$SO_3$M, oder $NR^5R^6$,
A für $NR^7$ oder S,
X für einen geradkettigen oder verzweigten ($C_1$-$C_{16}$)-Alkylen-Rest, für einen geradkettigen oder verzweigten, durch Hydroxy, Carboxy oder Amino substituierten ($C_1$-$C_{16}$)-Alkylenrest, einen Arylenrest oder einen durch Hydroxy, Carboxy oder Sulfo substituierten Arylen-Rest;
$R^5$ für ($C_1$-$C_4$)-Alkyl, das durch einen oder mehrere Hydroxy- oder 2-Hydroxyethoxy-, Gruppen substituiert ist; $R^6$ eine der Bedeutungen von $R^5$ oder Wasserstoff ist;
$R^7$ für Wasserstoff, Methyl oder Ethyl;
M für ein einwertiges Kation oder ein Äquivalent eines mehrwertigen Kations und
n für die Zahl 0 oder 1 stehen.

2. Säurefarbstoff nach Anspruch 1, **dadurch gekennzeichnet, daß** X für eine Alkylengruppe mit 1 bis 6 C-Atomen steht, die durch Hydroxy, Carboxy oder Amino substituiert sein kann.

3. Säurefarbstoff nach Anspruch 1 oder 2, **dadurch gekennzeichnet, daß** X für Phenylen steht, welches durch Hydroxy, Carboxy oder Sulfo substituiert sein kann.

4. Säurefarbstoff nach einem oder mehreren der Ansprüche 1 bis 3, **dadurch gekennzeichnet, daß** $R^5$ für Hydroxymethyl, Hydroxyethyl oder Hydroxypropyl und $R^6$ für Wasserstoff, Hydroxymethyl, Hydroxyethyl oder Hydroxypropyl stehen.

5. Säurefarbstoff nach einem oder mehreren der Ansprüche 1 bis 4, **dadurch gekennzeichnet, daß** M für ein Wasserstoff-, Lithium-, Natrium-, Kalium- oder ein Ammonium-Ion der allgemeinen Formel (II)

$$R^8R^9R^{10}R^{11}N^+ \qquad (II)$$

steht, in der
$R^8$, $R^9$, $R^{10}$ und $R^{11}$ unabhängig voneinander Wasserstoff, unsubstituiertes ($C_1$-$C_4$)-Alkyl, oder eine durch eine oder mehrere Hydroxy- oder 2-Hydroxyethoxy-Gruppen substituiertes ($C_1$-$C_4$)-Alkyl bedeuten, oder für eine Mischung der genannten Kationen steht.

6. Verfahren zur Herstellung von Säurefarbstoffen der Formel (I) nach einem oder mehreren der Ansprüche 1 bis 5, **dadurch gekennzeichnet, daß** man eine Verbindung der Formel (III)

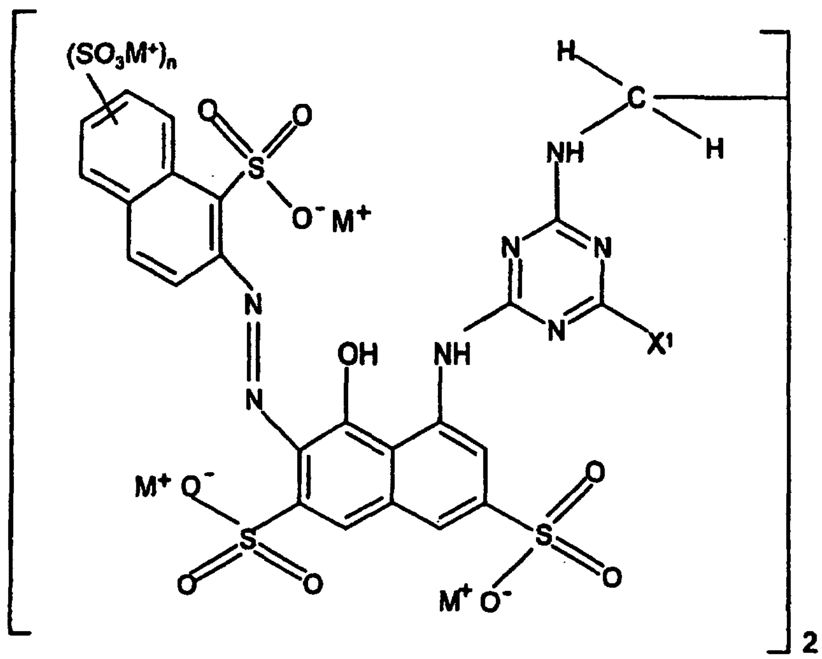

(III)

worin $X^1$ ein Halogenatom bedeutet, mit einer oder mehreren Verbindungen der Formel (IV), (V) und/oder (VII)

$$\text{H-A-X-COOM} \quad \text{(IV)}$$

$$\text{H-A-X-SO}_3\text{M} \quad \text{(V)}$$

$$\text{H-NR}^5\text{R}^6 \quad \text{(VII)}$$

umsetzt.

7. Verwendung von Säurefarbstoffen der allgemeinen Formel (I) gemäß einem oder mehreren der Ansprüche 1 bis 5 zum Färben und Bedrucken von natürlichen oder synthetischen Fasermaterialien, zum Aufzeichnen von Schrift und Bildern auf einem Aufzeichnungsmaterial, zum Färben von Papier oder Zellstoffen in der Masse, oder als Farbmittel für elektrophotographische Toner und für Pulverlacke.

8. Aufzeichnungsflüssigkeit, **gekennzeichnet durch** einen Gehalt an einem oder mehreren Säurefarbstoffen der Formel (I) gemäß einem oder mehreren der Ansprüche 1 bis 5.

## Claims

1. An acid dye of the formula (I)

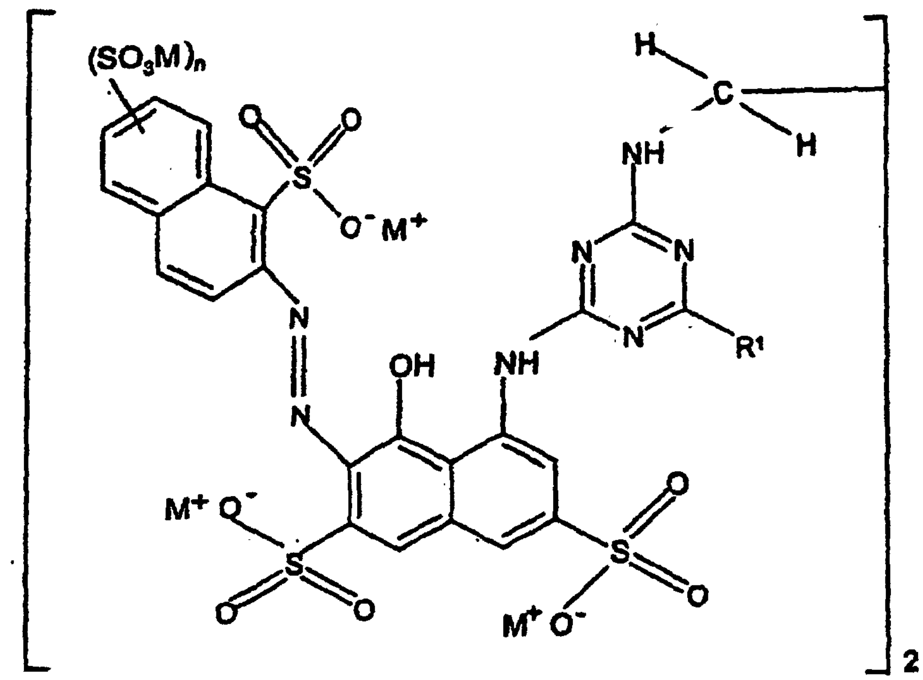

(I)

in which

- $R^1$ is A-X-COOM, A-X-$SO_3$M or $NR^5R^6$,
- A is $NR^7$ or S,
- X is a straight-chain or branched ($C_1$-$C_{16}$)-alkylene radical, a straight-chain or branched, hydroxyl-, carboxyl- or amino-substituted ($C_1$-$C_{16}$)-alkylene radical, an arylene radical or a hydroxyl-, carboxyl- or sulfo-substituted arylene radical;
- $R^5$ is ($C_1$-$C_4$)-alkyl substituted by one or more hydroxyl or 2-hydroxyethoxy groups;
- $R^6$ has one of the meanings of $R^5$ or is hydrogen;
- $R^7$ is hydrogen, methyl or ethyl;
- M is a monovalent cation or one equivalent of a polyvalent cation, and
- n is 0 or 1.

**2.** An acid dye as claimed in claim 1, wherein X is an alkylene group of 1 to 6 carbon atoms which can be substituted by hydroxyl, carboxyl or amino.

**3.** An acid dye as claimed in claim 1 or 2, wherein X is phenylene which can be substituted by hydroxyl, carboxyl or sulfo.

**4.** An acid dye as claimed in one or more of claims 1 to 3, wherein $R^5$ is hydroxymethyl, hydroxyethyl or hydroxypropyl, and $R^6$ is hydrogen, hydroxymethyl, hydroxyethyl or hydroxypropyl.

**5.** An acid dye as claimed in one or more of claims 1 to 4, wherein M is a hydrogen, lithium, sodium or potassium ion or an ammonium ion of the formula (II)

$$R^8R^9R^{10}R^{11}N^+ \qquad (II)$$

in which
$R^8$, $R^9$, $R^{10}$ and $R^{11}$ independently of one another are hydrogen, unsubstituted ($C_1$-$C_4$)-alkyl, or a ($C_1$-$C_4$)-alkyl substituted by one or more hydroxyl or 2-hydroxyethoxy groups,
or is a mixture of said cations.

**6.** A process for preparing an acid dye of the formula (I) as claimed in one or more of claims 1 to 5, which comprises reacting a compound of the formula (III)

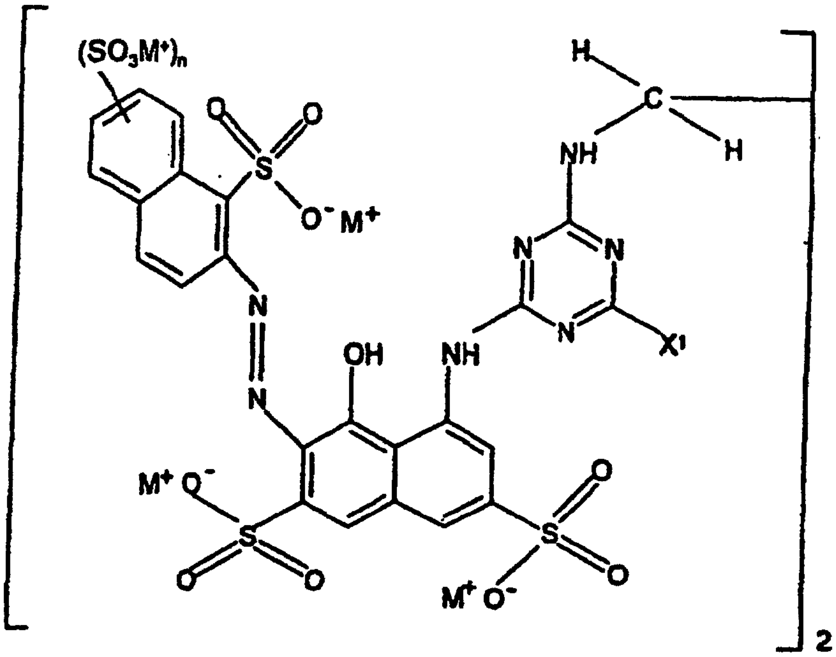

(III)

in which $X_1$ is a halogen atom with one or more compounds of the formulae (IV), (V) and/or (VII)

$$H\text{-}A\text{-}X\text{-}COOM \quad (IV)$$

$$H\text{-}A\text{-}X\text{-}SO_3M \quad (V)$$

$$H\text{-}NR^5\,R^6 \quad (VII)$$

**7.** The use of an acid dye of the formula (I) as claimed in one or more of claims 1 to 5 for dyeing and printing natural or synthetic fiber materials, for recording text and images on a recording material, for pulp-dyeing paper or pulps, or as a colorant for electrophotographic toners or for powder coating materials.

**8.** A recording liquid comprising one or more acid dyes of the formula (I) as claimed in one or more of claims 1 to 5.

## Revendications

**1.** Colorant acide de formule (I)

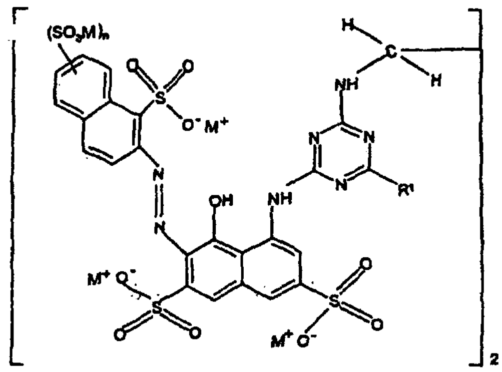

(I)

dans laquelle

$R^1$ représente les radicaux A-X-COOM, A-X-$SO_3$M ou $NR^5R^6$,
A représente $NR^7$ ou S,
X représente un radical alkylène en $C_1$-$C_{16}$ à chaîne droite ou ramifiée, un radical alkylène en $C_1$-$C_{16}$ à > chaîne droite ou ramifiée, substitué par un groupe hydroxy, carboxy ou amino, un radical arylène ou un radical arylène substitué par un groupe hydroxy, carboxy ou sulfo ;
$R^5$ représente un groupe alkyle en $C_1$-$C_4$ qui est substitué par un ou plusieurs groupes hydroxy ou 2-hydroxyéthoxy ;
$R^6$ a l'une des significations de $R^5$ ou est un atome d'hydrogène ;
$R^7$ représente un atome d'hydrogène ou le groupe méthyle ou éthyle ;
M représente un cation monovalent ou un équivalent d'un cation monovalent et
n représente le nombre 0 ou 1.

**2.** Colorant acide selon la revendication 1, **caractérisé en ce que** X représente un groupe alkylène ayant de 1 à 6 atomes de carbone, qui peut être substitué par un groupe hydroxy, carboxy ou amino.

**3.** Colorant acide selon la revendication 1 ou 2, **caractérisé en ce que** X représente un groupe phénylène qui peut être substitué par un groupe hydroxy, carboxy ou sulfo.

**4.** Colorant acide selon une ou plusieurs des revendications 1 à 3, **caractérisé en ce que** $R^5$ représente le groupe hydroxyméthyle, hydroxyéthyle ou hydroxypropyle et $R^6$ représente un atome d'hydrogène, le groupe hydroxyméthyle, hydroxyéthyle ou hydroxypropyle.

**5.** Colorant acide selon une ou plusieurs des revendications 1 à 4, **caractérisé en ce que** M représente un ion hydrogène, lithium, sodium, potassium ou un ion ammonium de formule générale (II)

$$R^8R^9R^{10}R^{11}N^+ \qquad (II)$$

dans laquelle
$R^8$, $R^9$, $R^{10}$ et $R^{11}$ représentent, indépendamment les uns des autres, un atome d'hydrogène, un groupe alkyle en $C_1$-$C_4$ non substitué ou un groupe alkyle en $C_1$-$C_4$ substitué par un ou plusieurs groupes hydroxy ou 2-hydroxyéthoxy, ou un mélange des cations cités.

**6.** Procédé pour la préparation de colorants acides de formule (I) selon une ou plusieurs des revendications 1 à 5, **caractérisé en ce qu'**on fait réagir un composé de formule (III) <

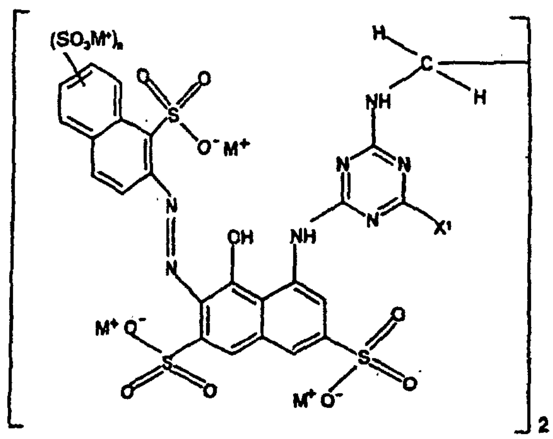

(III)

dans laquelle $X^1$ représente un atome d'halogène, avec un ou plusieurs composés de formule (IV), (V) et/ou (VII)

$$H\text{-}A\text{-}X\text{-}COOM \qquad (IV)$$

$$H\text{-}A\text{-}X\text{-}SO_3M \qquad (V)$$

$$H\text{-}NR^5R^6 \qquad (VII)$$

**7.** Utilisation de colorants acides de formule générale (I) selon une ou plusieurs des revendications 1 à 5, pour la teinture et l'impression de matériaux fibreux naturels ou synthétiques, pour l'enregistrement d'écriture et d'images sur un matériau d'enregistrement, pour la teinture du papier ou de celluloses dans la masse, ou en tant qu'agent colorant pour des toners électrophotographiques et pour des peintures en poudre.

**8.** Liquide d'enregistrement, **caractérisé par** une teneur en un ou plusieurs colorants acides de formule (I) selon une ou plusieurs des revendications 1 à 5.